# EUROPEAN PATENT SPECIFICATION

(11) **EP 0 994 011 B1**
(45) Date of publication and mention of the grant of the patent: **30.07.2003**
(21) Application number: 99307540.7
(22) Date of filing: 23.09.1999
(51) Int. Cl.: B62D 43/04

(54) **A motor vehicle wheel carrier**
Ersatzrad-Träger für Kraftfahrzeug
Support de roue de secours pour véhicule à moteur

(30) Priority: 13.10.1998 GB 9822308
(43) Date of publication of application: 19.04.2000
(73) Proprietor: Land Rover Group Limited, Lighthorne, Warwick CV35 0RG (GB)
(72) Inventor: Martin, Wayne Graham, Coventry, West Midlands, CV5 9HU (GB)
(74) Representative: Farrow, Robert Michael

(56) References cited:
- DE-U- 29 508 666
- FR-A- 2 728 861
- US-A- 4 717 054
- US-A- 5 183 192

## Description

This invention relates to a motor vehicle and in particular to a spare wheel carrier for mounting on the rear door of a motor vehicle.

It is known to provide a motor vehicle with a spare wheel carrier mounted on the rear door. The mounting of a spare wheel carrier in such a position is particularly common on four wheel drive vehicles intended for use off road. This is because mounting of the spare wheel under the vehicle reduces the available ground clearance which is undesirable for an off road vehicle, whereas mounting the spare wheel within the motor vehicle itself greatly reduces the luggage or cargo carrying capacity of the motor vehicle.

It is a problem with such a prior art wheel carrier that when the spare wheel is required to be used it is extremely difficult to manhandle the spare wheel from its mounted position on the rear door onto the ground. This is due to the considerable weight of a typical wheel used for such a motor vehicle.

A motor vehicle wheel carrier according to the preamble of claim 1 is shown in DE 295 08 666 U. While this shows one attempt to provide a wheel carrier that avoids some of the difficulty of manhandling the spare wheel from its mounted position on the rear door onto the ground, the moveable wheel fastening stud is fast with an upper link so that the wheel is constrained to move from an inclined position when stored towards a more vertical position as it approaches the ground. As such, the prior art carrier of DE 295 08 666 U is suitable only for use on trucks where the wheel can be mounted under a load carrying body or flat bed.

Another motor vehicle wheel carrier for mounting on a rear door of a vehicle is known from FR 2 728 861, where the spare wheel remains vertical during movement from the stored to the deployed position. According to this construction, in the stored position, the spare wheel with its support member is only fixed to the rear door, which has to be secured separately to the vehicle.

It is an object of this invention to provide an improved motor vehicle wheel carrier for mounting on a rear door of a motor vehicle as defined and characterised by the features of claim 1.

The winch may be attached to the first frame near to its upper end.

The second frame may be in the form of a generally U-shaped member having two legs, each leg being pivotally connected at a free end thereof to the first frame.

The inverted U-shaped member may have a cross-brace linking said legs, the cross-brace being used to attach a strap from the winch to the second frame.

The second wheel support means may include at least one threaded fastener to secure the spare wheel to the second frame.

The first wheel support means may include at least one threaded securing means to secure the spare wheel to the first frame.

Preferably, the or each threaded securing means may be to hold the second frame in said stored position.

Advantageously, the spacing of the or each threaded fastener with respect to the or each threaded securing means when the second frame is in the stored position corresponds to apertures in the spare wheel which apertures, when the wheel is in use, are used to secure the wheel to a rotatable hub of the motor vehicle.

The first wheel support means may be attached to the first frame by a box-like structure used as a housing for the winch.

The first frame may be substantially H-shaped having two vertical side rails and two spaced apart cross rails.

The winch may be connected to the first frame by attachment to the two cross rails.

There may be a third frame located within the rear door to which the first frame is attached.

Advantageously, the third frame and the first frame are interchangeable.

The winch may be operable by rotation of a hexagonal member of corresponding dimension to that of a threaded fastener used to secure the wheel to a rotatable hub of the motor vehicle.

The winch may be operable by an electric motor.

According to a second aspect of the invention there is provided a motor vehicle fitted with a wheel carrier according to said first aspect.

The invention will now be described by way of example and with reference to the accompanying drawings, of which:-
Fig.1 is a side view of a motor vehicle showing a motor vehicle wheel carrier according to the invention in a stored position;
Fig.2 is a side view of a motor vehicle similar to that shown in Fig.1 but showing the motor vehicle wheel carrier in a deployed position;
Fig.3 is a perspective rear view of the motor vehicle shown in Fig.1 with the spare wheel partially cut-away to show its mounting upon the spare wheel carrier;
Fig.4 is an exploded pictorial representation of a motor vehicle wheel carrier according to the invention as viewed from the door side of the wheel carrier;
Fig.5 is a pictorial representation of the wheel carrier shown in Fig.4 as viewed from a wheel mounting side of the wheel carrier showing the wheel carrier in a stored position; and
Fig.6 is a pictorial representation of part of a motor vehicle wheel carrier according to the invention showing a second arm of the wheel carrier in stored and deployed positions.

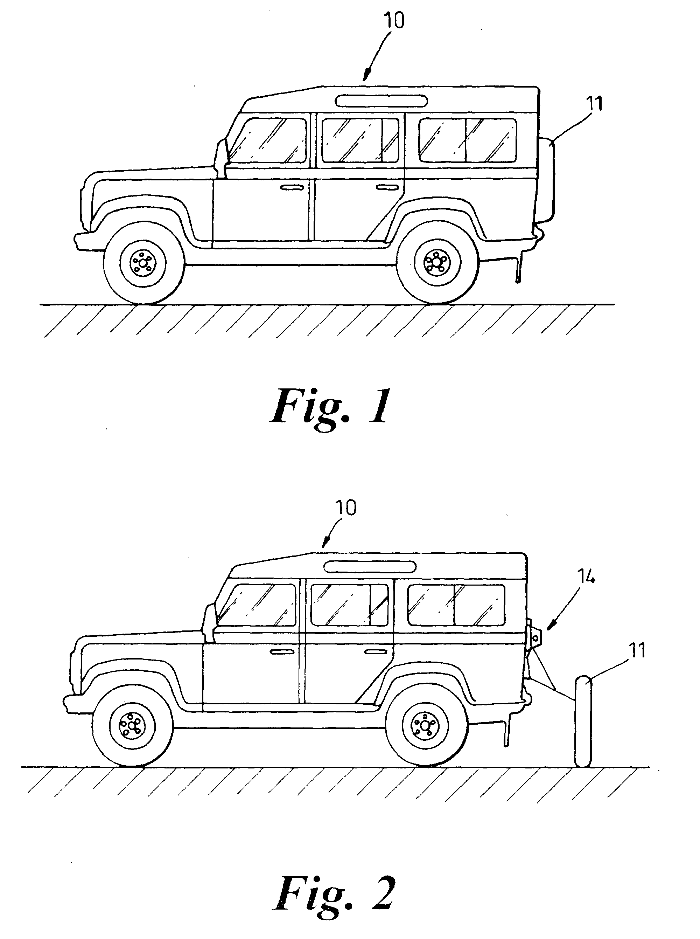

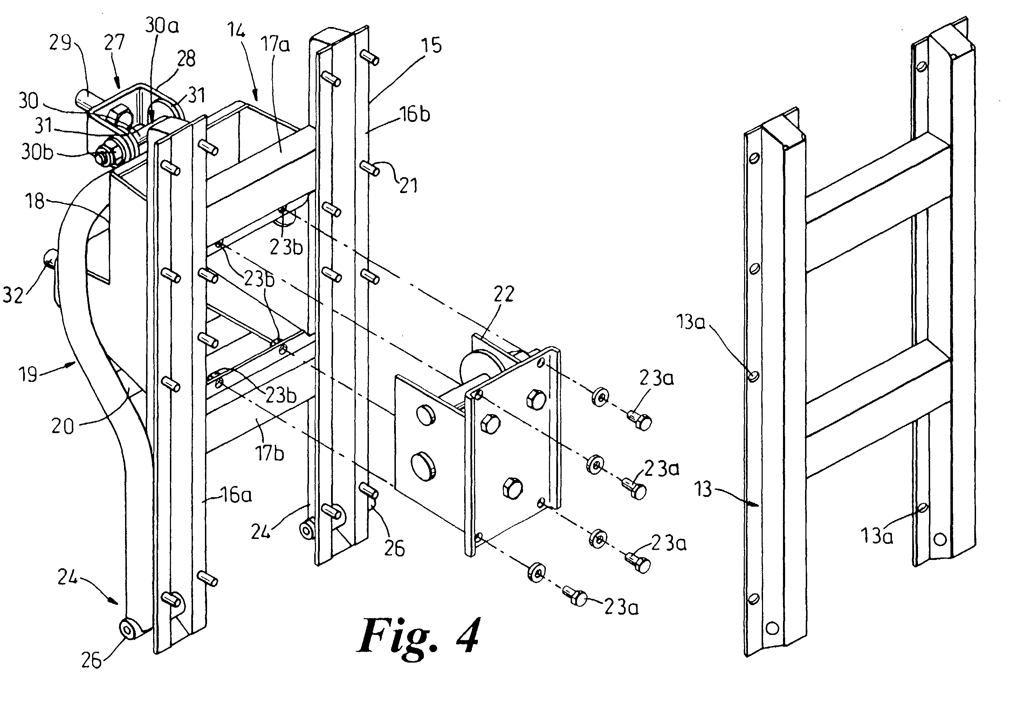

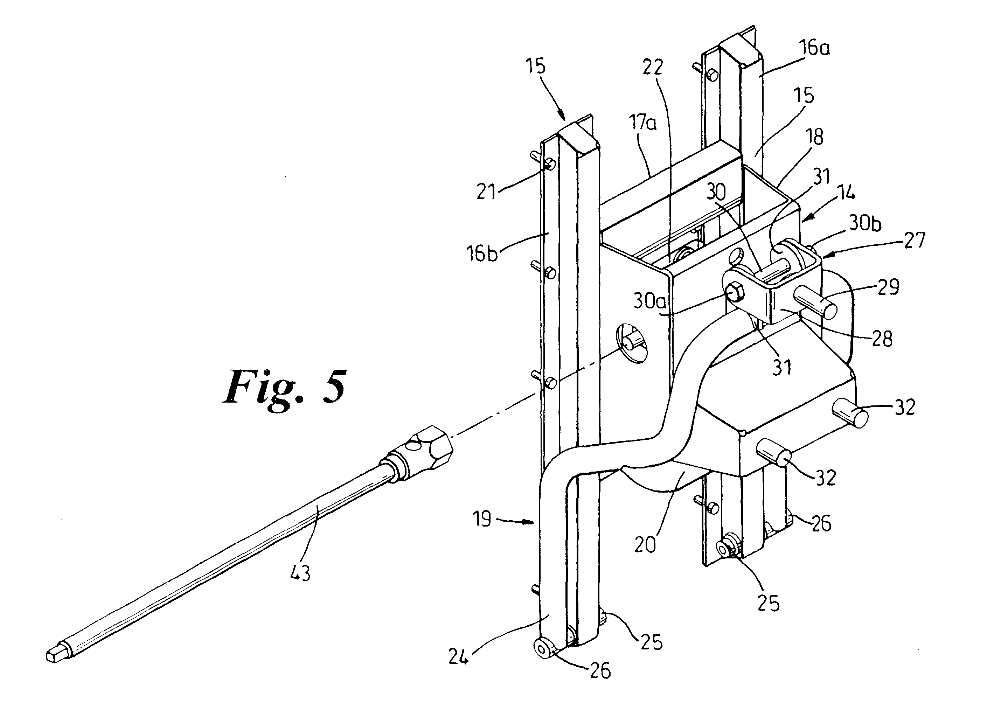

With reference to Figs 1 to 6 there is shown a motor vehicle 10 having a spare wheel 11 attached to a side hinged rear door 12 by means of a motor vehicle wheel carrier 14.

The motor vehicle wheel carrier 14 comprises a first frame 15 for securing in use to part of the body structure of the motor vehicle in the form of the rear door 12 by means of a third frame 13, a second frame 19 pivotally connected to the first frame 15 and a winch 22 to control movement of the second frame between a first substantially vertical stored position as shown in Fig.1 and a second deployed position as shown in Fig.2.

The first frame 15 is substantially H-shaped having two vertical side rails 16a, 16b joined together by upper and lower cross rails 17a, 17b. A first wheel support means in the form of two spaced apart threaded securing means 32 are attached to the first frame 15 by a box-like structure 18 used as a housing for the winch 22. Each of the threaded securing means is in the form of a threaded stud which extends outwardly from the end of said box-like structure.

The winch 22 is attached to the first frame 15 by means of flanges on the upper and lower edges of the lower and upper cross rails 17b, 17a the winch 22 being secured in place by means of threaded fasteners in the form of bolts 23a and nuts 23b.

The first frame 15 is secured to the rear door 12 by means of a number of threaded fasteners in the form of bolts 21 which extend through corresponding apertures in the rear door 12 for engagement with corresponding apertures 13a in the third frame 13.

A number of nuts (not shown) are then threadingly engaged with the bolts 21 to secure the first and third frames 15 and 13 to the rear door 12.

The third frame 13 is substantially identical to the first frame 15 and can be interchanged therewith. This reduces the number of parts that need to be manufactured. The first frame 15 is adapted at a lower end thereof to pivotally support the second frame 19 by means of an aperture formed in the lower end of each of the side rails 16a, 16b.

The winch 22 is connected to the first frame 15 towards an upper end of the first frame 15 so as to space the winch 22 from a horizontal pivot axis extending through the pivotal connections of the second frame 19 to the first frame 15.

The second frame 19 is substantially U-shaped having a first end for pivotal connection to the first frame 15 and a second end to which a second support means 27 is pivotally connected. The U-shaped frame 19 has two legs 24 each of which is adapted at a free end thereof corresponding to said second end of the U-shaped frame 19 for pivotal connection to the first frame 15 by means of a tubular boss 26 that is welded to the end of each of the legs 24.

A pivot pin 25 is engaged with each of the bosses 26 and the corresponding apertures in the lower end of the first frame 15 to form the pivotal connection between the first and second frames 15 and 19.

Towards the upper end of the U-shaped frame 19 the two legs 24 are joined together by means of a cross brace 20. The cross brace 20 is used to attach the U-shaped frame 19 to a strap attached to a spool 40 of the winch 22. The second wheel support means 27 is attached to the U-shaped frame by means of a pair of upstanding lugs 31 attached to the U-shaped frame 19.

The second support means 27 comprises a threaded fastener in the form of a bolt 29 which is engaged with an aperture in a U-shaped bracket 28. The U-shaped bracket 28 is pivotally secured to the first end of the U-shaped member 19 by means of a pivot pin 30 which is engaged with complimentary apertures in the lugs 31 and the U-shaped bracket 28. The pivot pin 30 is formed by a bolt 30a held in place by a nut 30b and allows the second wheel support means 27 to pivot about a substantially horizontal axis extending along the bolt 30a.

The spool 40 of the winch 22 is rotatable by means of a hexagonal-shaped drive member 42. The hexagonal-shaped drive member 42 is drivingly connected to a drive wheel 44 which co-operates with the spool 40. Rotation of the hexagonal member 42 will result in a corresponding rotation of the spool 40 which then winds in or winds out the strap 41 depending upon the direction of rotation.

The dimensions of the hexagonal drive member 42 are such that they correspond to the dimensions of the nuts or bolts normally used to secure the wheel 11 to a rotatable hub of the motor vehicle 10. This enables a box spanner 43 provided as part of the tool kit for the motor vehicle to be used to operate the winch 22. Alternatively, the hexagonal drive member could be dimensioned to correspond with some other hexagonally-shaped fastening member for which a spanner is provided in the tool kit such as, for example, a spark plug spanner.

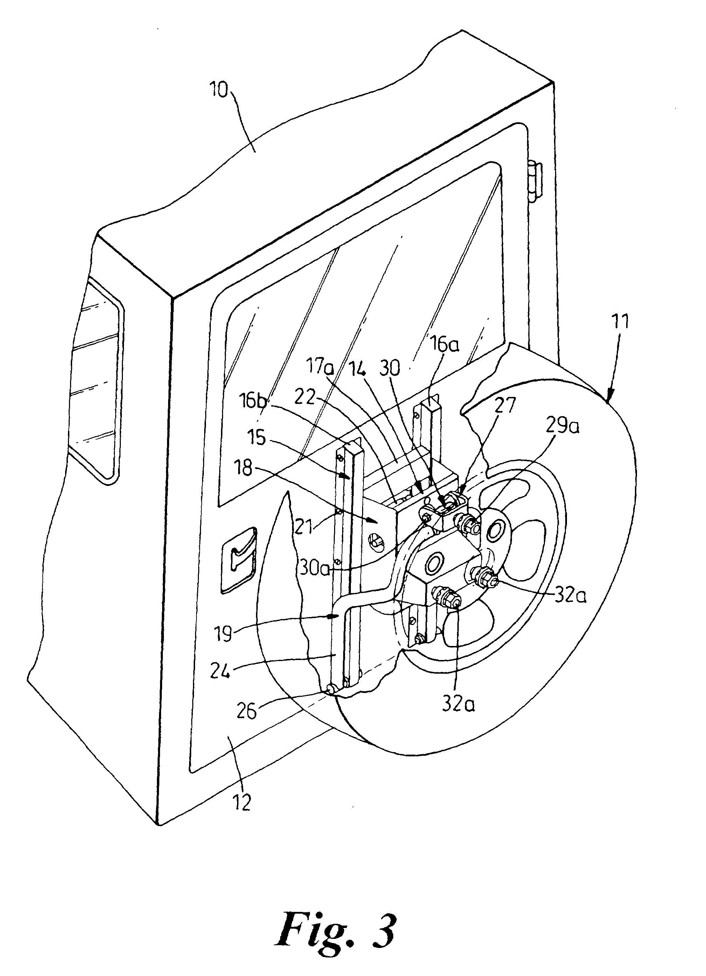

As is best seen with reference to Fig.3 of the accompanying drawings the bolt 29 and the two threaded studs 32 are spaced apart such that when the U-shaped frame 19 is in its stored position as shown on Fig.3 the bolt 29 and the studs 32 correspond with apertures in the wheel 11 which, when the wheel is in use, are used to secure the wheel to a rotatable hub of the motor vehicle.

The wheel 11 is secured to the U-shaped frame 19 by means of a nut 29a which is threadingly engaged with the bolt 29 and is secured to the first frame 15 by means of two nuts 32a each of which is threadingly engaged with a respective one of the threaded studs 32. The threaded studs 32 not only secure the wheel 11 to the first frame 15 but ensure that the second frame 19 remains in its stored position. For added security one of the nuts 32a may be a locking wheel nut to prevent theft of the wheel 11 from the wheel carrier 14.

Operation of the vehicle wheel carrier is as follows.

To lower the wheel 11 from its stored position adjacent to the rear door 12 to a lowered or deployed position as shown in Fig.2, the nuts 32a are first removed from the studs 32. The wheel 11 is then secured to the wheel carrier 14 only by means of the bolt 29 and the nut 29a which form part of the second wheel support means 27.

The spanner 43 is then inserted between the wheel 11 and the rear door 12 to engage the hexagonal drive member 42. Rotation of the hexagonal drive member 42 in a counter clockwise direction will result in clockwise rotation of the spool 40 thereby unwinding the strap 41 from the spool 40. This allows the U-shaped frame 19 to pivot about its second end away from the rear door 12 thereby lowering the wheel 11 towards the ground upon which the motor vehicle is resting.

Because the wheel 11 is pivotally connected to the U-shaped frame 19 by means of the second wheel support means 27 the wheel 11 remains substantially vertical during transition from the stored position to the deployed position which allows the wheel to be easily rolled away from the wheel carrier when the nut 29a is released. Therefore no unnecessary lifting or manhandling of the wheel 11 is required.

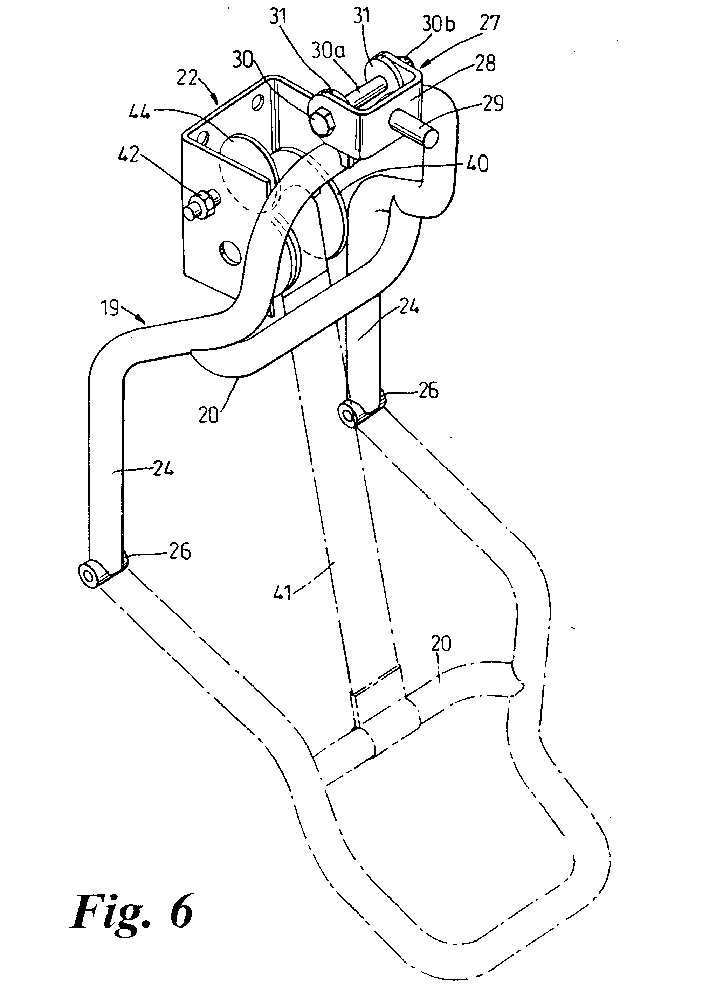

When the U-shaped frame 19 is in the deployed state as shown by the dotted outline on Fig.6 the second wheel support means 27 is positioned adjacent to the ground upon which the motor vehicle is resting, the exact distance will depend upon the amount of strap 41 that has been unwound from the spool 40 but ideally, this distance is such that the wheel 11 is in light abutment or slightly clear from the ground upon which the motor vehicle is resting. This ensures that the wheel 11 can be easily detached from the second arm 19.

It will be appreciated that this distance will not necessarily be the same for the wheel that has been replaced as in most cases this will have a flat tyre associated with it thereby reducing the height above the ground to which the second wheel support means 27 needs to be lowered for easy engagement of the bolt 29 with one of the apertures in the wheel 11.

It will be appreciated by the man skilled in the art that although the invention has been described with reference to an arrangement in which the means used to secure the wheel 11 to the carrier 14 are nuts 29a, 32a that are threadingly engaged with bolts or studs 29, 32 extending from the wheel carrier 14 the opposite arrangement could be employed in which case the bolt 29 and the studs 32 would be replaced by captive nuts and the nuts 29a, 32a would be replaced by bolts.

It will be further appreciated by the man skilled in the art that the invention is not limited to a winch using a nylon strap as disclosed here above other winch connection means such as ropes, cables , chains or wires could be used.

Although the invention has been described with reference to a manually operated winch it will be appreciated by the man skilled in the art that a winch powered by an electric motor under the control of an operator of the motor vehicle could also be used.

## Claims

1. A motor vehicle wheel carrier (14) comprising a first frame (15) secured to a motor vehicle (10), a second frame (19) pivotally connected at a first end thereof to a lower end of the first frame (15) for rotation about a substantially horizontal axis, a first wheel support means (32) for ho ding a spare wheel (11) fixed to the first frame (15) near to the upper end of the first frame (15) and a second wheel support means (27) for holding the spare wheel (11) pivotally connected to the second frame (19) at a second end thereof to allow the second wheel support means (27) to rotate about a substantially horizontal axis, the second frame (19) being movable between a first stored position and a second deployed position in which the second wheel support means (27) is positioned adjacent to the ground upon which the motor vehicle is resting, and a winch (22) attached to the first frame (15) and to the second frame (19) to move the second frame (19) between said first and second positions, **characterised in that** the wheel carrier (14) is mounted on a rear door (12) of the motor vehicle (10) by the first frame (15) such that when the second frame (19) is in the first stored position, the second frame (19) is substantially vertical and the first wheel support means (32) is arranged to hold the spare wheel (11) substantially vertical and that pivotally connecting the second wheel support means (27) to the second frame (19) allows the wheel (11) to remain substantially vertical during movement of the second frame (19) from the first stored position to the second deployed position.

2. A wheel carrier as claimed in Claim 1 in which the winch (22) is attached to the first frame (15) near to its upper end.

3. A wheel carrier as claimed in Claim 1 or Claim 2 in which the second frame (19) is in the form of a generally U-shaped member having two legs (24), each leg (24) being pivotally connected at a free end thereof to the first frame (15).

4. A wheel carrier as claimed in Claim 3 in which the U-shaped member (19) has a cross brace (20) linking said legs (24), the cross brace (20) being used to attach a strap (41) from the winch (22) to the second frame (19).

5. A wheel carrier as claimed in any of Claims 1 to 4 in which the second wheel support means (27) includes at least one threaded fastener (29) to secure the spare wheel (11) to the second frame (19).

6. A wheel carrier as claimed in any of Claims 1 to 5 in which the first wheel support means includes at least one threaded securing means (32) to secure the spare wheel (11) to the first frame (15).

7. A wheel carrier as claimed in Claim 6 in which the or each threaded securing means (32) is used to hold the second frame (19) in the stored position.

8. A wheel carrier as claimed in Claim 6 or Claim 7 when dependent upon Claim 5 in which the spacing of the or each threaded fastener (29) with respect to the or each threaded securing means (32) when the second frame (19) is in the stored position corresponds to apertures in the spare wheel (11) which apertures, when the wheel (11) is in use, are used to secure the wheel (11) to a rotatable hub of the motor vehicle (10).

9. A wheel carrier as claimed in any preceding claim in which the first wheel support means (32) is attached to the first frame (15) by a box-like structure (18) used as a housing for the winch (22).

10. A wheel carrier as claimed in any preceding claim in which the first frame (15) is substantially H-shaped having two vertical side rails (16a, 16b) and two spaced apart cross rails (17a, 17b).

11. A wheel carrier as claimed in Claim 10 in which the winch (22) is connected to the first frame (15) by attachment to the two cross rails (17a, 17b).

12. A wheel carrier as claimed in Claim 10 or in Claim 11 in which there is a third frame (13) located within the rear door (12) to which the first support frame (15) is attached.

13. A wheel carrier as claimed in Claim 12 in which the third frame (13) and the first frame (15) are interchangeable.

14. A wheel carrier as claimed in any preceding claim in which the winch (22) is operable by rotation of a hexagonal member (42) of corresponding dimension to that of a threaded fastener used to secure the wheel (11) to a rotatable hub of the motor vehicle (10).

15. A wheel carrier as claimed in any of Claims 1 to 13 in which the winch (22) is operable by an electric motor.

16. A motor vehicle (10) fitted with a wheel carrier as claimed in any of Claims 1 to 15.

## Patentansprüche

1. Kraftfahrzeugradhalter (14) mit einem an einem Kraftfahrzeug (10) befestigten ersten Rahmen (15), einem zweiten Rahmen (19), der an einem ersten Ende davon schwenkbar mit einem unteren Ende des ersten Rahmens (15) zur Drehung um eine im Wesentlichen horizontale Achse verbunden ist, einem ersten Radstützmittel (32) zum Festhalten eines in der Nähe des oberen Endes des ersten Rahmens (15) am Rahmen (15) befestigten Ersatzrads (11) und einem zweiten Radstützmittel (27) zum Halten des Ersatzrads (11) in Schwenkverbindung mit dem zweiten Rahmen (19) an einem zweiten Ende davon, damit sich das zweite Radstützmittel (27) um eine im Wesentlichen horizontale Achse drehen kann, wobei der zweite Rahmen (19) zwischen einer ersten Lagerungsposition und einer zweiten Verwendungsposition, in der das zweite Radstützmittel (27) neben dem Boden positioniert ist, auf dem das Kraftfahrzeug aufliegt, beweglich ist, und einer am ersten Rahmen (15) und am zweiten Rahmen (19) befestigten Winde (22) zur Bewegung des zweiten Rahmens (19) zwischen der ersten und der zweiten Position, **dadurch gekennzeichnet, dass** der Radhalter (14) durch den ersten Rahmen (15) so an einer Hecktür (12) des Kraftfahrzeugs (10) angebracht ist, dass, wenn sich der zweite Rahmen (19) in der ersten Lagerungsposition befindet, der zweite Rahmen (19) im Wesentlichen vertikal und das erste Radstützmittel (32) so angeordnet ist, dass es das Ersatzrad (11) im Wesentlichen vertikal hält und dass es durch eine Schwenkverbindung des zweiten Radstützmittels (27) mit dem zweiten Rahmen (19) dem Rad (11) gestattet wird, während der Bewegung des zweiten Rahmens (19) aus der ersten Lagerungsposition in die zweite Verwendungsposition im Wesentlichen vertikal zu bleiben.

2. Radhalter nach Anspruch 1, bei dem die Winde (22) in der Nähe des oberen Endes des ersten Rahmens (15) an letzterem befestigt ist.

3. Radhalter nach Anspruch 1 oder 2, bei dem der zweite Rahmen (19) in Form eines allgemein U-förmigen Glieds mit zwei Schenkeln (24) vorliegt, wobei jeder Schenkel (24) an einem freien Ende davon schwenkbar mit dem ersten Rahmen (15) verbunden ist.

4. Radhalter nach Anspruch 3, bei dem das U-förmige Glied (19) eine die Schenkel (24) verbindende Querstrebe (20) aufweist, die zur Befestigung eines Bands (41) von der Winde (22) am zweiten Rahmen (19) verwendet wird.

5. Radhalter nach einem der Ansprüche 1 bis 4, bei dem das zweite Radstützmittel (27) mindestens ein Gewindebefestigungselement (29) zur Befestigung des Ersatzrads (11) am zweiten Rahmen (19) enthält.

6. Radhalter nach einem der Ansprüche 1 bis 5, bei dem das erste Radstützmittel mindestens ein Gewindebefestigungsmittel (32) zur Befestigung des Ersatzrads (11) am ersten Rahmen (15) enthält.

7. Radhalter nach Anspruch 6, bei dem das oder jedes Gewindebefestigungsmittel (32) zum Halten des zweiten Rahmens (19) in der Lagerungsposition verwendet wird.

8. Radhalter nach Anspruch 6 oder 7, sofern er von Anspruch 5 abhängig ist, bei dem der Abstand des oder jedes Gewindebefestigungselements (29) zu, dem oder jedem Gewindebefestigungsmittel (32), wenn sich der zweite Rahmen (19) in der Lagerungsposition befindet, Öffnungen im Ersatzrad (11) entspricht, welche, wenn das Rad (11) im Gebrauch ist, dazu verwendet werden, das Rad (11) an einer drehbaren Nabe des Kraftfahrzeugs (10) zu befestigen.

9. Radhalter nach einem der vorhergehenden Ansprüche, bei dem das erste Radstützmittel (32) durch eine kastenförmige Konstruktion (18), die als Gehäuse für die Winde (22) verwendet wird, am ersten Rahmen (15) befestigt ist.

10. Radhalter nach einem der vorhergehenden Ansprüche, bei dem der erste Rahmen (15) im Wesentlichen H-förmig ist und zwei vertikale Seitenschienen (16a, 16b) und zwei voneinander beabstandete Querschienen (17a, 17b) aufweist.

11. Radhalter nach Anspruch 10, bei dem die Winde (22) durch Befestigung an den beiden Querschienen (17a, 17b) mit dem ersten Rahmen (15) verbunden ist.

12. Radhalter nach Anspruch 10 oder 11, bei dem ein dritter Rahmen (13) vorhanden ist, der sich in der Hecktür (12) befindet, an der der erste Stützrahmen (15) befestigt ist.

13. Radhalter nach Anspruch 12, bei dem der dritte Rahmen (13) und der erste Rahmen (15) austauschbar sind.

14. Radhalter nach einem der vorhergehenden Ansprüche, bei dem die Winde (22) durch Drehung eines sechseckigen Glieds (42) betätigbar ist, dessen Abmessung der eines Gewindebefestigungselements entspricht, das zur Anbringung des Rads (11) an einer drehbaren Nabe des Kraftfahrzeugs (10) verwendet wird.

15. Radhalter nach einem der Ansprüche 1 bis 13, bei dem die Winde (22) durch einen Elektromotor betätigbar ist.

16. Kraftfahrzeug (10), das mit einem Radhalter nach einem der Ansprüche 1 bis 15 ausgerüstet ist.

## Revendications

1. Support de roue pour véhicule à moteur (14) comprenant un premier cadre (15) fixé à un véhicule à moteur (10), un deuxième cadre (19) connecté de façon pivotante par une première de ses extrémités à une extrémité inférieure du premier cadre (15) pour la rotation autour d'un axe sensiblement horizontal, un premier moyen de support de roue (32) pour maintenir une roue de secours (11) fixée au premier cadre (15) près de l'extrémité supérieure du premier cadre (15) et un deuxième moyen de support de roue (27) pour maintenir la roue de secours (11) connectée de façon pivotante au deuxième cadre (19) à une deuxième extrémité de celui-ci pour permettre au deuxième moyen de support de roue (27) de tourner autour d'un axe sensiblement horizontal, le deuxième cadre (19) étant déplaçable entre une première position de rangement et une deuxième position déployée dans laquelle le deuxième moyen de support de roue (27) est en position adjacente au sol sur lequel stationne le véhicule à moteur, et un treuil (22) fixé au premier cadre (15) et au deuxième cadre (19) pour déplacer le deuxième cadre (19) entre lesdites première et deuxième positions, **caractérisé en ce que** le support de roue (14) est monté sur une porte arrière (12) du véhicule à moteur (10) par le premier cadre (15) de telle manière que, quand le deuxième cadre (19) est dans la première position de rangement, le deuxième cadre (19) est sensiblement vertical et le premier moyen de support de roue (32) est agencé pour maintenir la roue de secours (11) sensiblement verticale et que le fait de connecter de façon pivotante le deuxième moyen de support de roue (27) au deuxième cadre (19) permet que la roue (11) demeure sensiblement verticale durant le mouvement du deuxième cadre (19) de la première position de rangement à la deuxième position déployée.

2. Support de roue selon la revendication 1, dans lequel le treuil (22) est fixé au premier cadre (15) près de son extrémité supérieure.

3. Support de roue selon la revendication 1 ou la revendication 2, dans lequel le deuxième cadre (19) est sous la forme d'un élément généralement en forme de U ayant deux jambes (24), chaque jambe (24) étant connectée de façon pivotante à une extrémité libre de celle-ci au premier cadre (15).

4. Support de roue selon la revendication 3, dans lequel l'élément en forme de U (19) a une traverse (20) reliant lesdites jambes (24), la traverse (20) étant utilisée pour fixer une sangle (41) entre le treuil (22) et le deuxième cadre (19).

5. Support de roue selon l'une quelconque des revendications 1 à 4, dans lequel le deuxième moyen de support de roue (27) comporte au moins une fixation filetée (29) pour fixer la roue de secours (11) au deuxième cadre (19).

6. Support de roue selon l'une quelconque des revendications 1 à 5, dans lequel le premier moyen de support de roue comprend au moins un moyen de fixation fileté (32) pour fixer la roue de secours (11) au premier cadre (15).

7. Support de roue selon la revendication 6, dans lequel le ou chaque moyen de fixation fileté (32) est utilisé pour maintenir le deuxième cadre (19) en position de rangement.

8. Support de roue selon la revendication 6 ou la revendication 7 quand elle est dépendante de la revendication 5, dans lequel l'espacement de la ou de chaque fixation filetée (29) par rapport au ou à chaque moyen de fixation fileté (32) quand le deuxième cadre (19) est dans la position de rangement correspond aux ouvertures pratiquées dans la roue de secours (11), lesquelles ouvertures sont utilisées, pendant l'utilisation de la roue (11), pour fixer la roue (11) à un moyeu rotatif du véhicule à moteur (10).

9. Support de roue selon l'une quelconque des revendications précédentes, dans lequel le premier moyen de support de roue (32) est fixé au premier cadre (15) par une structure de type caisson (18) utilisée en tant que logement pour le treuil (22).

10. Support de roue selon l'une quelconque des revendications précédentes, dans lequel le premier cadre (15) est sensiblement en forme de H, ayant deux rails latéraux dans le sens vertical (16a, 16b) et deux rails transversaux espacés l'un de l'autre (17a, 17b).

11. Support de roue selon la revendication 10, dans lequel le treuil (22) est connecté au premier cadre (15) par la fixation aux deux rails transversaux (17a, 17b).

12. Support de roue selon la revendication 10 ou la revendication 11, dans lequel il y a un troisième cadre (13) intégré à la porte arrière (12) sur lequel se fixe le premier cadre de support (15).

13. Support de roue selon la revendication 12, dans lequel le troisième cadre (13) et le premier cadre (15) sont interchangeables.

14. Support de roue selon l'une quelconque des revendications précédentes, dans lequel le treuil (22) peut être commandé par la rotation d'un élément hexagonal (42) dont la dimension correspond à celle d'une fixation filetée utilisée pour fixer la roue (11) à un moyeu rotatif du véhicule à moteur (10).

15. Support de roue selon l'une quelconque des revendications 1 à 13, dans lequel le treuil (22) peut être commandé par un moteur électrique.

16. Véhicule à moteur (10) doté d'un support de roue selon l'une quelconque des revendications 1 à 15.
